(19) Europäisches Patentamt
European Patent Office
Office européen des brevets

(11) **EP 3 500 895 B1**

(12) **EUROPÄISCHE PATENTSCHRIFT**

(45) Veröffentlichungstag und Bekanntmachung des Hinweises auf die Patenterteilung:
**19.01.2022 Patentblatt 2022/03**

(21) Anmeldenummer: **17772597.5**

(22) Anmeldetag: **26.07.2017**

(51) Internationale Patentklassifikation (IPC):
**G05B 19/418** (2006.01) **B67D 7/04** (2010.01)

(52) Gemeinsame Patentklassifikation (CPC):
**B67D 7/04; B67D 7/0401; B67D 7/403; G05B 19/4189;** Y02P 80/10; Y02P 90/02

(86) Internationale Anmeldenummer:
**PCT/DE2017/000234**

(87) Internationale Veröffentlichungsnummer:
**WO 2018/033167 (22.02.2018 Gazette 2018/08)**

(54) **HANDLING SYSTEM FÜR EINE BEFÜLLANLAGE ZUR BEFÜLLUNG VON BEHÄLTERN UND KREISLÄUFEN VON FAHRZEUGEN MIT VERSCHIEDENEN BETRIEBSSTOFFEN AN MONTAGELINIEN DER AUTOMOBILINDUSTRIE**

HANDLING SYSTEM FOR A FILLING SYSTEM FOR FILLING CONTAINERS AND CIRCUITS OF VEHICLES WITH DIFFERENT OPERATING MATERIALS ON ASSEMBLY LINES OF THE AUTOMOBILE INDUSTRY

SYSTÈME DE MANIPULATION POUR UNE INSTALLATION DE REMPLISSAGE SERVANT À REMPLIR DES RÉSERVOIRS ET DES CIRCUITS DE VÉHICULES AVEC DIVERS CONSOMMABLES SUR DES LIGNES DE MONTAGE DE L'INDUSTRIE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.08.2016 DE 102016010179**

(43) Veröffentlichungstag der Anmeldung:
**26.06.2019 Patentblatt 2019/26**

(73) Patentinhaber: **Dürr Somac GmbH**
**09366 Stollberg (DE)**

(72) Erfinder:
• **SCHMIDT, Karlheinz**
**08289 Schneeberg (DE)**

• **HEILMANN, Katja**
**09350 Lichtenstein (DE)**
• **WEIGELT, Marcus**
**09337 Hohenstein-Ernstthal (DE)**

(74) Vertreter: **Findeisen Neumann Scheit Partnerschaft mbB**
**Pornitzstraße 1**
**09112 Chemnitz (DE)**

(56) Entgegenhaltungen:
**DE-A1-102009 020 312     DE-A1-102012 008 378**
**DE-T2- 69 604 489**

**Beschreibung**

Die Erfindung betrifft ein Handlingsystem für eine Befüllanlage zur Befüllung von Behältern und Kreisläufen von Fahrzeugen mit verschiedenen Betriebsstoffen an Montagelinien der Automobilindustrie, wobei die Befüllanlage als wesentliche Baugruppen eine Grundeinheit, eine Steuerung, eine Konsole und einen Adapter aufweist, wobei der Adapter mit mehreren Schläuchen zur Zuführung der jeweiligen Betriebsstoffe in Wirkverbindung steht, die als ein Schlauchpaket baulich zusammengefasst und an der Konsole verlagerbar abgestützt sind.

In der Automobilindustrie müssen die Fahrzeuge im Herstellungsprozess mit mehreren unterschiedlichen Medien befüllt werden, beispielsweise mit Kraft-, Schmier-, Kühl- und anderen Betriebsstoffen. Diese Medien werden an den Montagelinien in überwiegend automatisierten Prozessen mit Befüllanlagen in die jeweiligen Kreisläufe der Fahrzeuge eingespeist. Die Befüllanlagen bestehen im Wesentlichen aus Grundeinheit, Steuerung, Konsole und Adapter, wobei der Adapter mit Schläuchen zur Zuführung der jeweiligen Medien in Wirkverbindung steht. Dabei enthalten die Schläuche zumeist mehrere Leitungen mit unterschiedlichen Funktionen für Vakuumbeaufschlagung, Rücksaugen, Füllen, Belüften sowie auch elektrische Leitungen, so dass sich Schlauchpakete ergeben.

Für die Befüllung muss ein Werker in Abhängigkeit der Position der Befüllanlage zunächst die Adapter mit den Schlauchpaketen zum Fahrzeug bringen und dort am Anschluss der jeweils zu befüllenden Kreisläufe anschließen. Während der nachfolgenden Befüllung fährt die Befüllanlage mit dem verbundenen Fahrzeug mit, wobei sich die Befüllanlage mit der gleichen Geschwindigkeit wie die Montagelinie bewegt. Das Grundprinzip einer entsprechend ausgestatteten Montagelinie ist z.B. aus US 2003 016 4200 A1 bekannt.

Derartige Montagelinien weisen üblicherweise mehrere Befüllanlagen in einem Abschnitt auf. Somit können die Fahrzeuge in taktmäßig bedingten Zeiteinheiten innerhalb von lediglich einem Abschnitt der Montagelinie korrekt befüllt werden. Damit eine gute Handhabung der Befülltechnik für den Werker gewährleistet wird, müssen die Bewegungsabläufe der Schläuche bzw. Schlauchpakete sorgfältig aufeinander abgestimmt werden. Dabei muss insbesondere verhindert werden, dass sich mehrere Befüllanlagen im Betrieb gegenseitig behindern. Eine diesbezüglich typische Situation kann auftreten, sofern eine - bezogen auf die Längsausrichtung der Montagelinie - weiter außen angeordnete Befüllanlage in Betrieb ist und eine weiter innen angeordnete Befüllanlage in ihre Ausgangsposition zurückfährt. Während dieser Bewegung durchfährt sie möglicherweise einen Bereich, in dem von der im Eingriff befindlichen äußeren Befüllanlage die Schlauchpakete zum Fahrzeug ausgebracht sind. Allerdings sind bereits mehrere technische Lösungen bekannt, die solche Probleme vermeiden und eine störungsfreie Befüllung ermöglichen sollen.

Grundlegende Lösungsansätze für mehrere sich innerhalb eines gemeinsamen Bauraums separat bewegende Schläuche, Kabel und dergleichen sind aus DE 20 2008 001 415 U1 bekannt. Dabei wird die Antriebseinheit zur Bewegung dieser Bauteile über Mitnehmer und Kupplungselemente lösbar ausgeführt, so dass in definierten kritischen Betriebspunkten eine Bewegungsüberschneidung vermieden wird.

Aus DE 696 04 489 T2 ist eine technische Lösung für das automatische Betanken von Kraftfahrzeugen an öffentlichen Tankstellen bekannt. Es wird eine konkrete konstruktive Ausführung einer gestellartigen Konstruktion für die Aufnahme von Baugruppen für die Betankung eines Fahrzeuges mit Kraftstoff vorgeschlagen. Während diese Konstruktion somit primär zur Befüllung mit lediglich einem Betriebsstoff konzipiert ist, werden an Montagelinien der Fahrzeughersteller mehrere Betriebsstoffe befüllt, neben Kraftstoffen zum Beispiel auch Kühlmittel, Kältemittel, Bremsflüssigkeit, Servoöl und Scheibenwaschmittel.

DE 10 2012 008 378 A1 beschreibt eine Vorrichtung zur Handhabung von Schlauchpaketen an Befüllanlagen, die mindestens einen Schlauch längs zur Fahrtrichtung der Befüllanlage in einer Schlaufe aufnimmt und hierfür einen Bauraum aufweist, in dem eine Schlauchlänge speicherbar ist, welche etwa der zweifachen Baulänge der Befüllanlage entspricht. In diesem Bauraum können auch mehrere Schlauchpakete hintereinander angeordnet werden, wobei jedes dieser Schlauchpakete unabhängig von anderen Schlauchpaketen bewegbar ist.

Die vorstehend benannten haben sich ebenso wie zahlreiche weitere technische Lösungen grundsätzlich bewährt, um eine Befüllung der Fahrzeuge an Montagelinien durchführen zu können. Allerdings ergeben sich durch aktuelle Forderungen nach noch kürzeren Taktzeiten zunehmend Probleme, die offensichtlich durch die bisher übliche pneumatische Betätigung des Schlauchhandlings begründet sind. Denn mit dem Arbeitsmedium Pneumatik ist eine schnelle und sehr exakte Positionierung schwierig. Weitere Nachteile sind das auftretende Losbrechmoment bei der Beaufschlagung sowie die Tatsache, dass überwiegend lediglich ein (einziger) Druck für die Betätigung von verschiedenen Schlauchpaketen verfügbar ist.

Aufgabe der Erfindung ist es, eine technische Lösung zur Handhabung von Schlauchpaketen bzw. Schlauchkassetten an Befüllanlagen zu schaffen, die mit einem anderen Medium als Pneumatik betrieben wird und somit die infolge pneumatischer Wirkungsweise zwangsläufig auftretenden Nachteile überwindet.

Diese Aufgabe wird gelöst, indem der Antrieb der verlagerbaren Schlauchpakete und der Antrieb einer mit einer Ablage für den Adapter ausgestalteten Hubeinheit jeweils als ein elektromotorischer Antrieb ausgestaltet sind. Der grundlegende Lösungsansatz besteht also in der Überlegung, den Schlaucheinzug und die Hubachse elektrisch zu betätigen. Probleme infolge der bisher üblichen pneumatischen Betätigung des Schlauchhandlings (ungenaue Positionierung, Losbrechmoment, nur ein Druck für verschiedene Schlauchkassetten) sind somit nicht relevant.

Die erfindungsgemäße Nutzung elektromotorischer Komponenten anstelle pneumatischer Komponenten erfordert jedoch eine Modifizierung im Regelverhalten der Bewegungsabläufe von Adapter und Hubeinheit.

Diesbezüglich wird vorgeschlagen, dass für die Bewegung der Hubeinheit von ihrer Arbeitsposition zur Parkposition als Sollposition die eigene Parkposition vorgegeben wird. Gleichzeitig wird der Adapterzuführung eine indirekte Sollposition auf Basis der aktuellen Position der Hubeinheit zugeordnet. Dabei wird die Hubeinheit als MASTER bewertet, die dynamisch die Position der Adapterzuführung vorgibt. Diese Position wird berechnet mit einer Formel

$$Pos_{AZ} = \frac{Pos_{HE\,1} - Anf_{HE\,1} + ... + Pos_{HE\,n} - Anf_{HE\,n}}{End_{HE\,1} - Anf_{HE\,1} + ... + End_{HE\,n} - Anf_{HE\,n}} * (End_{AZ} - Anf_{AZ}) + Anf_{AZ}$$

Weiterhin wird vorgeschlagen, dass für die Bewegung der Adapterzuführung von ihrer Parkposition zur Arbeitsposition als Sollposition die eigene Arbeitsposition vorgegeben wird. Gleichzeitig wird der Hubeinheit eine indirekte Sollposition auf Basis der aktuellen Position der Adapterzuführung zugeordnet. Dabei wird die Adapterzuführung als MASTER bewertet, die dynamisch die Position der Hubeinheit vorgibt. Diese Positionen werden berechnet mit den Formeln

$$Pos_{HE\,1} = \frac{(Pos_{AZ} - Anf_{AZ}) * (End_{HE\,1} - Anf_{HE\,1})}{End_{AZ} - Anf_{AZ}} + Anf_{HE\,1}$$

$$\bullet$$
$$\bullet$$
$$\bullet$$

$$Pos_{HE\,x} = \frac{(Pos_{AZ} - Anf_{AZ}) * (End_{HE\,x} - Anf_{HE\,x})}{End_{AZ} - Anf_{AZ}} + Anf_{HE\,x}$$

Da die Adapter in der Konsole während der Bewegungen (Fahrten) des Handlingsystems geklemmt sind, ergibt sich durch das unterschiedliche Folgen der verschiedenen Achsen eine zusätzliche Sicherheit gegen ein Steckenbleiben bzw. Losreisen der Adapter. Dabei fungiert immer diejenige Achse als MASTER, welche die Achse "lockerer" werden lässt.

Für eine funktionell optimale Positionszuordnung der einzelnen Baugruppen sollten auch die Geschwindigkeiten der relevanten Baugruppen aufeinander abgestimmt werden.

Hierfür wird vorgeschlagen, dass die Bewegungsgeschwindigkeit der Adapterzuführung nach folgender Formel berechnet wird:

$$v_{AZ} = \frac{(End_{AZ} - Anf_{AZ}) * (v_{HE\,1} + ... + v_{HE\,n})}{End_{HE\,1} - Anf_{HE\,1} + ... + End_{HE\,n} - Anf_{HE\,n}}$$

Weiterhin wird vorgeschlagen, dass die Bewegungsgeschwindigkeit der Hubeinheit nach folgenden Formeln berechnet wird:

$$v_{HE\,1} = v_{HE\,ges} * \frac{End_{HE\,1} - Anf_{HE\,1}}{(End_{HE\,1} - Anf_{HE\,1} + ... + End_{HE\,n} - Anf_{HE\,n})}$$

$$\bullet$$
$$\bullet$$
$$\bullet$$

$$v_{HE\,x} = v_{HE\,ges} * \frac{End_{HE\,x} - Anf_{HE\,x}}{(End_{HE\,1} - Anf_{HE\,1} + ... + End_{HE\,n} - Anf_{HE\,n})}$$

Es gilt:

$$v_{HE\,ges} = v_{HE\,1} + ... + v_{HE\,n}$$

Die jeweilige Geschwindigkeit wird vorzugsweise auf die Hubachse bezogen berechnet. Hierbei kann für übliche Einsatzbedingungen von Befüllanlagen eine Geschwindigkeit für die Hubachse vorgegeben werden, z.B. 15 m/min. Die Geschwindigkeiten der verschiedenen Achsen ergeben sich durch die Längenverhältnisse der einzelnen Achsen.

Neben den Vorteilen des systembedingten Austauschs pneumatisch / elektrisch betriebener Komponenten besteht ein wesentlicher Vorteil des vorgeschlagenen Handlingsystems darin, dass nunmehr ein Einholen einer ausgefahrenen Adapterzustellung (entsprechend dem letzten Prozess, der abgelegt wird) zu einem Zeitpunkt möglich ist, in dem das gesamte System aus Gründen einer Zeitersparnis bereits schon wieder aus dem Arbeitsbereich nach oben fährt, also in die Parkposition einfährt.

Bei Anwendung des Handlingsystems fährt die Adapterzustellung immer mit den Hubachsen auf eine Mittelposition. Von da aus wird der Adapter entnommen auf eine Endposition, um das Fahrzeug zu befüllen. Sobald der Adapter wieder abgelegt wird, fährt die Adapterzustellung normalerweise wieder zurück auf Mittelposition. Sofern es sich jedoch um den letzten noch nicht abgelegten Adapter handelt, fährt das Handlingsystem nach oben, sobald dieser Adapter abgelegt wird.

Die Geschwindigkeiten des Handlingsystems für AUF und AB sind wesentlich langsamer als die Zustellgeschwindigkeit (sofern Adapter entnommen wird) bzw. die Einholgeschwindigkeit (sofern Adapter abgelegt wird). Demzufolge kann der zuletzt abgelegte Adapter stets seine dynamisch vorgegebene Sollposition während des Einfahrens des Handlingsystems einholen.

In der Zeichnung ist der grundlegende Aufbau eines erfindungsgemäßen Handlingsystems dargestellt. Es zeigen:

Fig. 1    eine auf die wesentlichen Komponenten reduzierte Seitenansicht der Befüllanlage in einer ersten Position
Fig. 2    die in Fig. 1 dargestellte Befüllanlage in einer zweiten Position
Fig. 3    die stilisierte Darstellung der Bewegungen von Adapterzuführung und Hubeinheit

Das Handlingsystem ist für eine Befüllanlage zur Befüllung von Behältern und Kreisläufen von Fahrzeugen mit verschiedenen Betriebsstoffen an Montagelinien der Automobilindustrie konzipiert. Dabei weist die Befüllanlage als wesentliche Baugruppen eine Grundeinheit, eine Steuerung, eine Konsole und einen Adapter auf, wobei die zwei zuerst genannten Elemente in der Zeichnung nicht näher dargestellt sind. Der Adapter steht mit mehreren Schläuchen zur Zuführung der jeweiligen Betriebsstoffe in Wirkverbindung, die baulich als Schlauchpaket zusammengefasst sind, Dieses Schlauchpaket wird in einem tragwerkähnlichen Rahmen angeordnet und ist an der Konsole verlagerbar abgestützt. Ein derartiger Aufbau ist bekannt, so dass hierzu auf nähere Darlegungen verzichtet werden kann.

Wesentlich im vorliegenden Sachverhalt ist jedoch, dass der Antrieb der verlagerbaren Schlauchpakete 1 und der Antrieb einer mit einer Ablage 2 für den Adapter ausgestalteten Hubeinheit 3 jeweils als ein elektromotorischer Antrieb ausgestaltet ist, der hier mit einem Bezugszeichen "M" stilisiert ist.

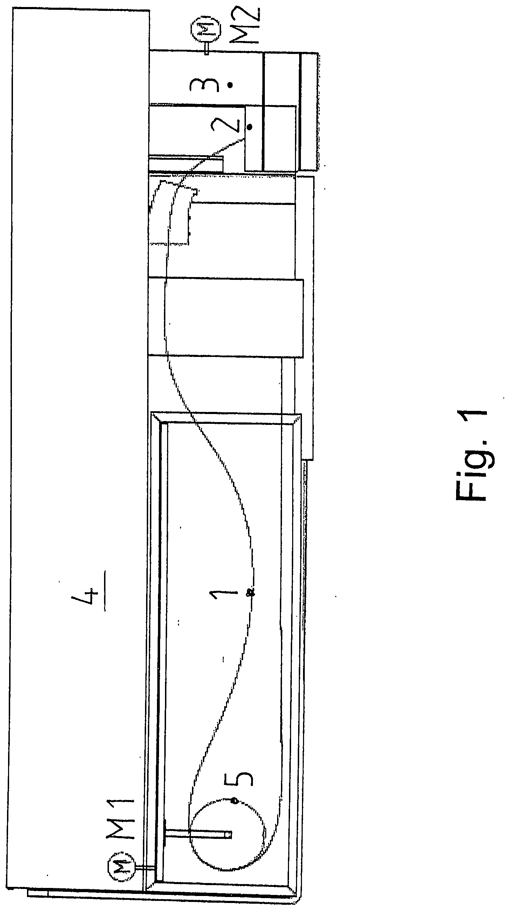

**Fig. 1** zeigt das Handlingsystem in Parkposition, also in einem Zustand, bei dem keine Befüllung erfolgt. An der Konsole 4 ist das über Umlenkrollen 5 geführte Schlauchpaket 1 im eingefahrenen Zustand gelagert. Die Hubeinheit 3 mit der Adapterablage 2 ist ebenfalls eingefahren.

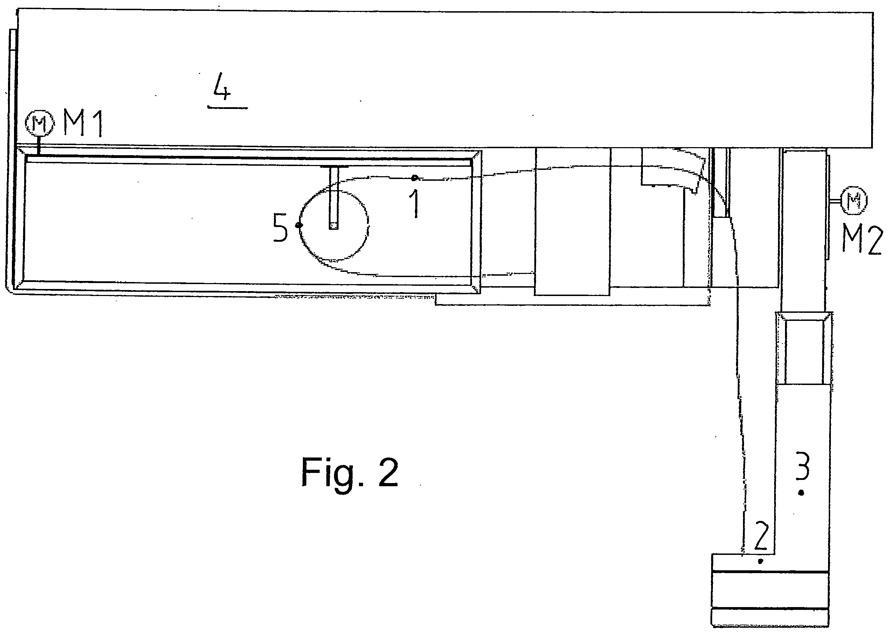

**Fig. 2** zeigt das Handlingsystem in Arbeitsposition, also in einem Zustand, bei dem eine Befüllung möglich ist. An der Konsole 4 ist das Schlauchpaket 1 in einer weitgehend ausgefahrenen Position gelagert. Die Umlenkrollen 5 befinden sich in einer gegenüber Fig. 1 weit nach rechts verlagerten Position, wobei diese Bewegung mit dem elektromotorischen Antrieb M1 ausgelöst worden ist. Gleichzeitig ist auch die Hubeinheit 3 mit Adapterablage 2 in einer weitgehend ausgefahrenen Position und somit gegenüber Fig. 1 weit nach unten verlagert. Diese Bewegung ist mit dem elektromotorischen Antrieb M2 ausgelöst worden.

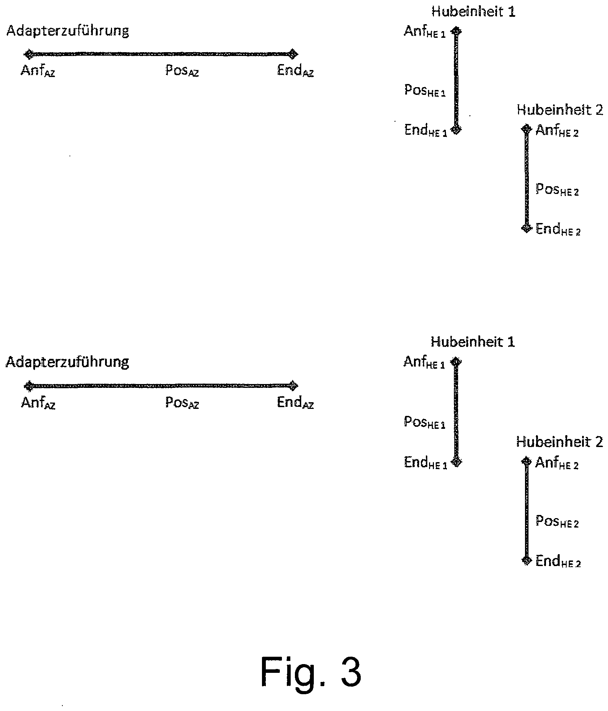

**Fig. 3** zeigt eine stilisierte Darstellung der Bewegungsabläufe von Adapterzuführung und Hubeinheit. Da die erfindungsgemäße technische Lösung nicht nur für Handlingsysteme mit lediglich einer Hubeinheit geeignet ist, zeigt Fig. 3 eine Variante mit beispielsweise zwei Hubeinheiten HE 1 und HE 2. Dabei sind auf den drei Achsen jeweils typische Punkte im Bewegungsablauf ($\text{Anf}_{HE1}$ / $\text{Pos}_{HE1}$ / $\text{End}_{HE1}$ usw.) markiert, die in den oben erläuterten Formeln zur Festlegung von Position und/oder Geschwindigkeit berücksichtigt werden. Sofern diese allgemeinen Formeln auf die hier konkrete Ausführung angewendet werden, ergibt sich folgender Zusammenhang:

Für die Bewegung von der Arbeitsposition zur Parkposition jeder Hubeinheit HE1 und HE2 wird als Sollposition ihre eigene Parkposition $\text{Anf}_{HE1}$ bzw. $\text{Anf}_{HE2}$ vorgegeben. Gleichzeitig wird jeder Adapterzuführung AZ eine indirekte Sollposition auf Basis der aktuellen Position der Hubeinheiten HE1 und HE2 zugeordnet. Dabei wird die gesamte Hubeinheit HE1 und HE2 als MASTER bewertet, welche dynamisch die Position der Adapterzuführung AZ vorgibt nach der Positionsformel

$$\text{Pos}_{AZ} = \left( \frac{\text{Pos}_{HE\,1} - \text{Anf}_{HE\,1} + \text{Pos}_{HE\,2} - \text{Anf}_{HE\,2}}{\text{End}_{HE\,1} - \text{Anf}_{HE\,1} + \text{End}_{HE\,2} - \text{Anf}_{HE\,2}} \right) \cdot (\text{End}_{AZ} - \text{Anf}_{AZ}) + \text{Anf}_{AZ}$$

Weiterhin wird für die Bewegung von der Parkposition zur Arbeitsposition jeder Adapterzuführung AZ als Sollposition deren eigene Arbeitsposition $End_{AZ}$ vorgegeben. Gleichzeitig wird jeder Hubeinheit HE1 und HE2 eine indirekte Sollposition auf Basis der aktuellen Position der Adapterzuführung AZ zugeordnet. Dabei wird die Adapterzuführung AZ als MASTER bewertet, welche dynamisch die Position der Hubeinheit HE1 und HE2 vorgibt nach den Positionsformeln

$$Pos_{HE\,1} = \frac{(Pos_{AZ} - Anf_{AZ}) * (End_{HE\,1} - Anf_{HE\,1})}{End_{AZ} - Anf_{AZ}} + Anf_{HE\,1}$$

$$Pos_{HE\,2} = \frac{(Pos_{AZ} - Anf_{AZ}) * (End_{HE\,2} - Anf_{HE\,2})}{End_{AZ} - Anf_{AZ}} + Anf_{HE\,2}$$

6

Die Bewegungsgeschwindigkeit der Adapterzuführung AZ wird berechnet als

$$v_{AZ} = \frac{(End_{AZ} - Anf_{AZ}) * (v_{HE\,1} + v_{HE\,2})}{(End_{HE\,1} - Anf_{HE\,1} + End_{HE\,2} - Anf_{HE\,2})}$$

Die Bewegungsgeschwindigkeit der Hubeinheit HE1 und HE2 wird berechnet als

$$v_{HE\,1} = v_{HE\,ges} * \frac{End_{HE\,1} - Anf_{HE\,1}}{(End_{HE\,1} - Anf_{HE\,1} + End_{HE\,2} - Anf_{HE\,2})}$$

$$v_{HE\,2} = v_{HE\,ges} * \frac{End_{HE\,2} - Anf_{HE\,2}}{(End_{HE\,1} - Anf_{HE\,1} + End_{HE\,2} - Anf_{HE\,2})}$$

**Bezugszeichenliste**

1    Schlauchpaket
2    Ablage für Adapter
3    Hubeinheit
4    Konsole
5    Umlenkrolle

M1    elektromotorischer Antrieb für Schlauchpaket
M2    elektromotorischer Antrieb für Hubeinheit

AZ        Adapterzuführung
HE 1    Hubeinheit 1
HE 2    Hubeinheit 2

$Pos_{Az}$    aktuelle Ist Position Adapterzuführung
$Anf_{AZ}$    Parkposition Adapterzuführung
$End_{Az}$    Arbeitsposition Adapterzuführung
$v_{AZ}$        Geschwindigkeit Adapterzuführung

$Pos_{HE1}$    aktuelle Ist Position Hubeinheit 1

$\text{Anf}_{\text{HE1}}$    Parkposition Hubeinheit 1
$\text{End}_{\text{HE1}}$    Arbeitsposition Hubeinheit 1
$v_{\text{HE1}}$    Geschwindigkeit Hubeinheit 1

$\text{Pos}_{\text{HE2}}$    aktuelle Ist Position Hubeinheit 2
$\text{Anf}_{\text{HE2}}$    Parkposition Hubeinheit 2
$\text{End}_{\text{HE2}}$    Arbeitsposition Hubeinheit 2
$v_{\text{HE2}}$    Geschwindigkeit Hubeinheit 2

$v_{\text{HE ges}}$    Geschwindigkeit Hubachse (HE1 + HE2)


**Patentansprüche**

1.  Handlingsystem für eine Befüllanlage zur Befüllung von Behältern und Kreisläufen von Fahrzeugen mit verschiedenen Betriebsstoffen an Montagelinien der Automobilindustrie, wobei die Befüllanlage als wesentliche Baugruppen eine Grundeinheit, eine Steuerung, eine Konsole und einen Adapter aufweist, wobei der Adapter mit mehreren Schläuchen zur Zuführung der jeweiligen Betriebsstoffe in Wirkverbindung steht, die als ein Schlauchpaket baulich zusammengefasst und an der Konsole verlagerbar abgestützt sind,
    **dadurch gekennzeichnet, dass** der Antrieb der verlagerbaren Schlauchpakete (1) und der Antrieb einer mit einer Ablage (2) für den Adapter ausgestalteten Hubeinheit (3) jeweils als ein elektromotorischer Antrieb (M1; M2) ausgestaltet ist.

2.  Handlingsystem nach Anspruch 1, **dadurch gekennzeichnet,**
    **dass** das Handlingsystem mindestens eine Hubeinheit (HE) aufweist, wobei für die Bewegung von der Arbeitsposition zur Parkposition der Hubeinheit (HE) als Sollposition ihre eigene Parkposition (HE Anf) vorgegeben wird und der Adapterzuführung (AZ) eine indirekte Sollposition auf Basis der aktuellen Position der Hubeinheit (HE) zugeordnet wird, wobei die Hubeinheit (HE) als MASTER bewertet wird und dynamisch die Position der Adapterzuführung (AZ) vorgibt nach einer Positionsformel

$$\text{Pos}_{\text{AZ}} = \frac{\text{Pos}_{\text{HE 1}} - \text{Anf}_{\text{HE 1}} + \dots + \text{Pos}_{\text{HE n}} - \text{Anf}_{\text{HE n}}}{\text{End}_{\text{HE 1}} - \text{Anf}_{\text{HE 1}} + \dots + \text{End}_{\text{HE n}} - \text{Anf}_{\text{HE n}}} * (\text{End}_{\text{AZ}} - \text{Anf}_{\text{AZ}}) + \text{Anf}_{\text{AZ}}$$

3.  Handlingsystem nach Anspruch 1, **dadurch gekennzeichnet,**
    **dass** das Handlingsystem mindestens eine Hubeinheit (HE) aufweist, wobei für die Bewegung von der Parkposition zur Arbeitsposition der Adapterzuführung (AZ) als Sollposition ihre eigene Arbeitsposition (AZ End) vorgegeben wird und der Hubeinheit (HE) eine indirekte Sollposition auf Basis der aktuellen Position der Adapterzuführung (AZ) zugeordnet wird, wobei die Adapterzuführung (AZ) als MASTER bewertet wird und dynamisch die Position der Hubeinheit (HE) vorgibt nach den Positionsformeln

$$\text{Pos}_{\text{HE 1}} = \frac{(\text{Pos}_{\text{AZ}} - \text{Anf}_{\text{AZ}}) * (\text{End}_{\text{HE 1}} - \text{Anf}_{\text{HE 1}})}{\text{End}_{\text{AZ}} - \text{Anf}_{\text{AZ}}} + \text{Anf}_{\text{HE 1}}$$

$$\bullet$$
$$\bullet$$
$$\bullet$$

$$\text{Pos}_{\text{HE x}} = \frac{(\text{Pos}_{\text{AZ}} - \text{Anf}_{\text{AZ}}) * (\text{End}_{\text{HE x}} - \text{Anf}_{\text{HE x}})}{\text{End}_{\text{AZ}} - \text{Anf}_{\text{AZ}}} + \text{Anf}_{\text{HE x}}$$

4.  Handlingsystem nach Anspruch 2 oder 3, **dadurch gekennzeichnet,**
    **dass** die Bewegungsgeschwindigkeit der Adapterzuführung (AZ) berechnet wird nach einer Formel

$$v_{\text{AZ}} = \frac{(\text{End}_{\text{AZ}} - \text{Anf}_{\text{AZ}}) * (v_{\text{HE 1}} + \dots + v_{\text{HE n}})}{\text{End}_{\text{HE 1}} - \text{Anf}_{\text{HE 1}} + \dots + \text{End}_{\text{HE n}} - \text{Anf}_{\text{HE n}}}$$

5. Handlingsystem nach Anspruch 2 oder 3, **dadurch gekennzeichnet,**
   **dass** die Bewegungsgeschwindigkeit der Hubeinheit (HE) berechnet wird nach einer Formel

$$V_{HE\,1} = V_{HE\,ges} * \frac{End_{HE\,1} - Anf_{HE\,1}}{(End_{HE\,1} - Anf_{HE\,1} + \ldots + End_{HE\,n} - Anf_{HE\,n})}$$

$$\bullet$$
$$\bullet$$
$$\bullet$$

$$V_{HE\,x} = V_{HE\,ges} * \frac{End_{HE\,x} - Anf_{HE\,x}}{(End_{HE\,1} - Anf_{HE\,1} + \ldots + End_{HE\,n} - Anf_{HE\,n})}$$

wobei gilt:

$$V_{HE\,ges} = V_{HE\,1} + \ldots + V_{HE\,n}$$

## Claims

1. A handling system for a filling system for filling containers and circuits of vehicles with different operating materials on assembly lines of the automobile industry, wherein the filling system comprises, as its essential structural components, a base unit, a controller, a console, and an adapter, wherein the adapter is operatively connected to multiple hoses for supplying the respective operating materials, which hoses are structurally combined in a hose packet and movably supported on the console,
   **characterized in that** the drive system of the movable hose packets (1) and the drive system of a lifting unit (3) equipped with a tray (2) for the adapter are each designed as an electromotive drive (M1; M2).

2. The handling system according to claim 1, **characterized in that**
   the handling system comprises at least one lifting unit (HE), wherein the target position for moving from the working position to the parking position is preset for the lifting unit (HE) as its respective own parking position (HE Anf) and the adapter delivery unit (AZ) is assigned an indirect target position based on the current position of the lifting unit (HE), wherein the lifting unit (HE) is rated MASTER and dynamically presets the position of the adapter delivery unit (AZ) according to the position formula

$$Pos_{AZ} = \frac{Pos_{HE\,1} - Anf_{HE\,1} + \ldots + Pos_{HE\,n} - Anf_{HE\,n}}{End_{HE\,1} - Anf_{HE\,1} + \ldots + End_{HE\,n} - Anf_{HE\,n}} * (End_{AZ} - Anf_{AZ}) + Anf_{AZ}$$

3. The handling system according to claim 1, **characterized in that**
   the handling system comprises at least one lifting unit (HE), wherein the target position for moving from the parking position to the working position is preset for the adapter delivery unit (AZ) as its respective own working position (AZ End) and the lifting unit (HE) is assigned an indirect target position based on the current position of the adapter delivery unit (AZ), wherein the adapter delivery unit (AZ) is rated MASTER and dynamically presets the position of the adapter lifting unit (HE) according to the position formulas

$$Pos_{HE\,1} = \frac{(Pos_{AZ} - Anf_{AZ}) * (End_{HE\,1} - Anf_{HE\,1})}{End_{AZ} - Anf_{AZ}} + Anf_{HE\,1}$$

$$\bullet$$
$$\bullet$$
$$\bullet$$

$$Pos_{HE\,x} = \frac{(Pos_{AZ} - Anf_{AZ}) * (End_{HE\,x} - Anf_{HE\,x})}{End_{AZ} - Anf_{AZ}} + Anf_{HE\,x}$$

4. The handling system according to claim 2 or 3, **characterized in that**
the moving speed of the adapter delivery unit (AZ) is calculated according to a formula

$$v_{AZ} = \frac{(End_{AZ} - Anf_{AZ}) * (v_{HE\,1} + ... + v_{HE\,n})}{End_{HE\,1} - Anf_{HE\,1} + ... + End_{HE\,n} - Anf_{HE\,n}}$$

5. The handling system according to claim 2 or 3, **characterized in that**
the moving speed of the lifting unit (HE) is calculated according to a formula

$$v_{HE\,1} = v_{HE\,ges} * \frac{End_{HE\,1} - Anf_{HE\,1}}{(End_{HE\,1} - Anf_{HE\,1} + ... + End_{HE\,n} - Anf_{HE\,n})}$$

$$\bullet$$
$$\bullet$$
$$\bullet$$

$$v_{HE\,x} = v_{HE\,ges} * \frac{End_{HE\,x} - Anf_{HE\,x}}{(End_{HE\,1} - Anf_{HE\,1} + ... + End_{HE\,n} - Anf_{HE\,n})}$$

wherein:

$$v_{HE\,ges} = v_{HE\,1} + ... + v_{HE\,n}$$

**Revendications**

1. Système de manipulation pour une installation de remplissage servant à remplir des réservoirs et des circuits de véhicules avec divers consommables sur des lignes de montage de l'industrie automobile, l'installation de remplissage ayant comme sous-ensembles essentiels une unité de base, une commande, une console et un adaptateur, l'adaptateur étant connecté de manière opérationnelle à une plusieurs tuyaux pour fournir les consommables respectifs, les tuyaux étant structurellement combinés en tant qu'ensemble de tuyaux et supportés de manière déplaçable sur la console,
**caractérisé en ce que** l'entraînement des ensembles de tuyaux mobiles (1) et l'entraînement d'une unité de levage (3) conçue avec un support (2) pour l'adaptateur sont chacun conçus comme un entraînement par moteur électrique (M1 ; M2).

2. Système de manipulation selon la revendication 1, **caractérisé en ce que**,
le système de manipulation comprend au moins une unité de levage (HE), dans laquelle, pour le déplacement de la position de travail à la position de stationnement de l'unité de levage (HE), sa propre position de stationnement (HE Anf) est prédéfinie comme position de consigne et une position de consigne indirecte est attribuée à l'alimentation de l'adaptateur (AZ) sur la base de la position actuelle de l'unité de levage (HE), l'unité de levage (HE) étant évaluée comme MASTER et prédéfinissant dynamiquement la position de l'alimentation de l'adaptateur (AZ) selon une formule de position

$$Pos_{AZ} = \frac{Pos_{HE\,1} - Anf_{HE\,1} + ... + Pos_{HE\,n} - Anf_{HE\,n}}{End_{HE\,1} - Anf_{HE\,1} + ... + End_{HE\,n} - Anf_{HE\,n}} * (End_{AZ} - Anf_{AZ}) + Anf_{AZ}$$

3. Système de manipulation selon la revendication 1, **caractérisé en ce que**,
le système de manipulation comprend au moins une unité de levage (HE), dans laquelle, pour le déplacement de stationnement à la position de travail de l'alimentation de l'adaptateur (AZ), sa propre position de travail (AZ End) est prédéfinie comme position de consigne et une position de consigne indirecte est attribuée à l'unité de levage (HE) sur la base de la position actuelle de l'alimentation de l'adaptateur (AZ), l'alimentation de l'adaptateur (AZ) étant évaluée comme MASTER et prédéfinissant dynamiquement la position de l'unité de levage (HE) selon les

formules de position

$$Pos_{HE1} = \frac{(Pos_{AZ} - Anf_{AZ}) * (End_{HE1} - Anf_{HE1})}{End_{AZ} - Anf_{AZ}} + Anf_{HE1}$$

• 
• 
•

$$Pos_{HEx} = \frac{(Pos_{AZ} - Anf_{AZ}) * (End_{HEx} - Anf_{HEx})}{End_{AZ} - Anf_{AZ}} + Anf_{HEx}$$

4.  Système de manipulation selon la revendication 2 ou 3, **caractérisé en ce que**, la vitesse de déplacement de l'adaptateur d'alimentation (AZ) est calculée selon une formule

$$v_{AZ} = \frac{(End_{AZ} - Anf_{AZ}) * (v_{HE1} + ... + v_{HEn})}{End_{HE1} - Anf_{HE1} + ... + End_{HEn} - Anf_{HEn}}$$

5.  Système de manipulation selon la revendication 2 ou 3, **caractérisé en ce que**, la vitesse de déplacement de l'unité de levage (HE) est calculée selon une formule

$$v_{HE1} = v_{HEges} * \frac{End_{HE1} - Anf_{HE1}}{(End_{HE1} - Anf_{HE1} + ... + End_{HEn} - Anf_{HEn})}$$

• 
• 
•

$$v_{HEx} = v_{HEges} * \frac{End_{HEx} - Anf_{HEx}}{(End_{HE1} - Anf_{HE1} + ... + End_{HEn} - Anf_{HEn})}$$

avec:

$$v_{HEges} = v_{HE1} + ... + v_{HEn}$$

Fig. 1

Fig. 2

EP 3 500 895 B1

EP 3 500 895 B1

Adapterzuführung

Anf$_{AZ}$      Pos$_{AZ}$      End$_{AZ}$

Hubeinheit 1

Anf$_{HE1}$

Pos$_{HE1}$

End$_{HE1}$

Hubeinheit 2

Anf$_{HE2}$

Pos$_{HE2}$

End$_{HE2}$

Adapterzuführung

Anf$_{AZ}$      Pos$_{AZ}$      End$_{AZ}$

Hubeinheit 1

Anf$_{HE1}$

Pos$_{HE1}$

End$_{HE1}$

Hubeinheit 2

Anf$_{HE2}$

Pos$_{HE2}$

End$_{HE2}$

Fig. 3

12

## IN DER BESCHREIBUNG AUFGEFÜHRTE DOKUMENTE

### In der Beschreibung aufgeführte Patentdokumente

- US 20030164200 A1
- DE 202008001415 U1
- DE 69604489 T2
- DE 102012008378 A1